# EUROPEAN PATENT SPECIFICATION

(11) **EP 1 910 474 B1**
(45) Date of publication and mention of the grant of the patent: **14.04.2010**
(21) Application number: 06819050.3
(22) Date of filing: 17.07.2006
(51) Int. Cl.: C09B 67/24

(54) **ACID DYE COMPOSITION OF ANTHRAQUINONE DYES**
SÄUREFARBSTOFFZUSAMMENSETZUNG VON ANTHRAQUINONFARBSTOFFEN
COMPOSITION DE COLORANT ACIDE DE COLORANTS D'ANTHRAQUINONE

(30) Priority: 20.07.2005 EP 05106662
(43) Date of publication of application: 16.04.2008
(73) Proprietor: Clariant Finance (BVI) Limited, Road Town, Tortola (VG)
(72) Inventor: SIEBER, Helmut, 79618 Rheinfelden (DE); MARAZZI, Rino, CH-4133 Pratteln (CH)
(74) Representative: Jacobi, Carola
(86) International application number: PCT/EP2006/064311
(87) International publication number: WO 2007/028665

(56) References cited:
- US-A- 5 131 919
- US-A- 6 030 420
- PATENT ABSTRACTS OF JAPAN vol. 007, no. 235 (C-191), 19 October 1983 (1983-10-19) & JP 58 125758 A (SUMITOMO KAGAKU KOGYO KK), 26 July 1983 (1983-07-26)
- PATENT ABSTRACTS OF JAPAN vol. 007, no. 235 (C-191), 19 October 1983 (1983-10-19) & JP 58 125755 A (SUMITOMO KAGAKU KOGYO KK), 26 July 1983 (1983-07-26)

## Description

The invention relates to novel acid dye composition, to a process for their preparation and to their use for dyeing organic substrates.

The single dyestuff according to the formula (I) or (II) or (III) 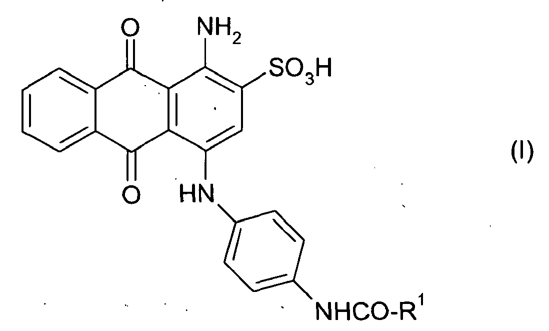 wherein R¹ signifies methyl, ethyl, propyl or butyl
or 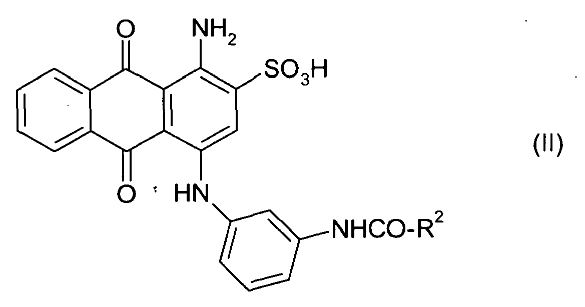 wherein R² signifies methyl, ethyl, propyl or butyl
or 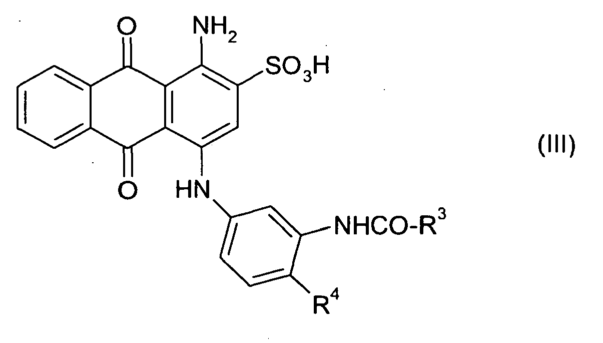 wherein
- R³: signifies methyl, ethyl, propyl or butyl and
- R⁴: signifies methyl, ethyl, propyl or butyl,
are well known and are used for dyeing wool, polyamides, leather and paper. However, applied as single dyes in a dye bath the stability of the bath is not very high and precipitations of the dyestuffs in the bath occurs.

This problem is solved by the dye composition according to the invention.

The present application provides an acid dye composition comprising a dyestuff according to the formula (I) 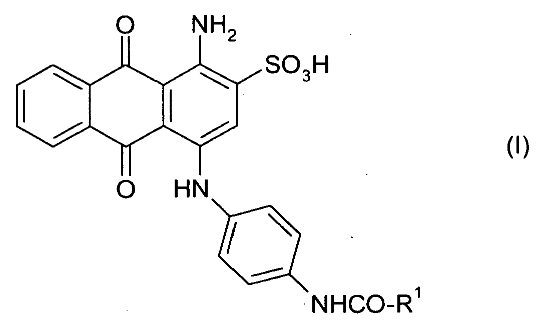 wherein R¹ signifies methyl, ethyl, propyl or butyl
and a dyestuff according to the formula (II) 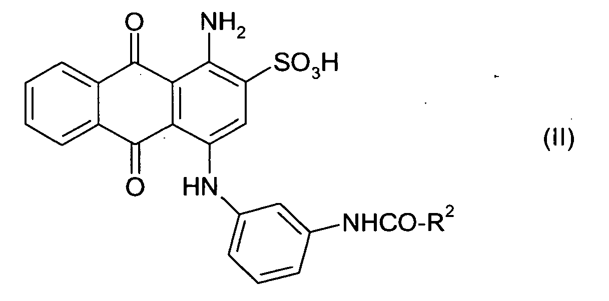 wherein R² signifies methyl, ethyl, propyl or butyl
and a dyestuff according to the formula (III) 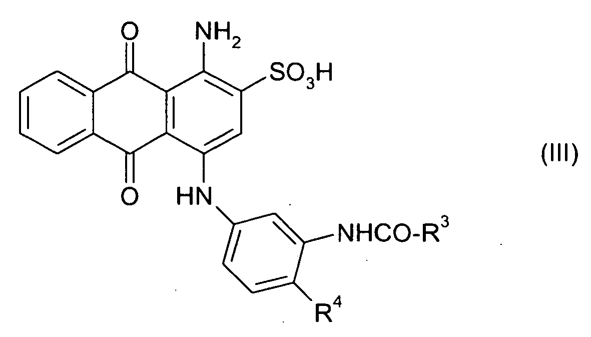 wherein
- R³: signifies methyl, ethyl, propyl or butyl and
- R⁴: signifies methyl, ethyl, propyl or butyl.

By preference the substituents R¹, R², R³ or R⁴ signify independently methyl or ethyl.

More preferred mixtures according to the invention comprise a dyestuff according to the formula (Ia) 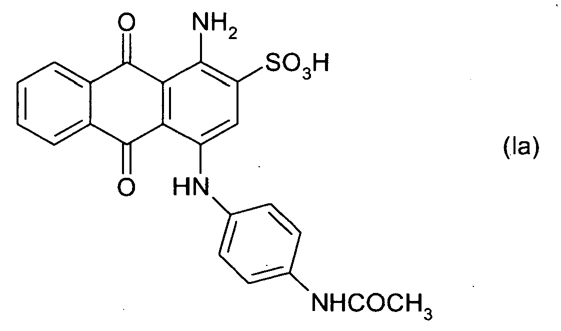 and a dyestuff according to the formula (IIa) 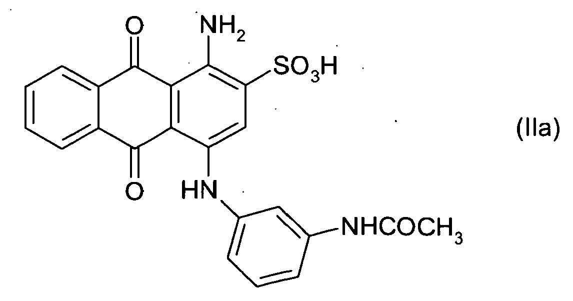 and a dyestuff according to the formula (IIIa)

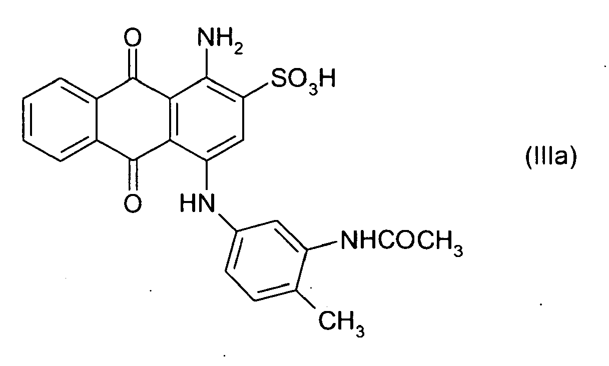

The compositions according to the invention comprise 10 weight - % to 70 weight - % of a compound according to the formula (I) and 10 weight - % to 70 weight - % of a compound according to the formula (II) and 10 weight - % to 70 weight - % of a compound according to the formula (III) with the proviso the sum of the weight - % compounds according to the formula (I) and (II) and (III) is 100 weight - %.

Preferably the compositions according to the invention comprise 15 weight - % to 60 weight - % of a compound according to the formula (I) and 15 weight - % to 60 weight - % of a compound according to the formula (II) and 15 weight - % to 60 weight - % of a compound according to the formula (III) with the proviso the sum of the weight - % compounds according to the formula (I) and (II) and (III) is 100 weight - %.

More preferably the compositions according to the invention comprise 25 weight - % to 50 weight - % of a compound according to the formula (I) and 15 weight - % to 30 weight - % of a compound according to the formula (II) and 40 weight - % to 60 weight - % of a compound according to the formula (III) with the proviso the sum of the weight - % compounds according to the formula (I) and (II) and (III) is 100 weight - %.

The dyes according to the formula (I) or (II) or (III) may also be in their salt form.

The invention also provides a process for preparing compositions according to the invention. The dyestuffs according to the formula (I) and (II) and (III) may be mixed in the dye bath or may be mixed as powders or as formulations before being dissolved in the dye bath.

The compositions according to the invention are particularly suitable for dyeing or printing fibrous material consisting of natural or synthetic polyamides in blue shades. The mixtures according to the invention and their salts are suitable for producing inkjet printing inks and for using these inkjet printing inks to print fibrous material which consists of natural or synthetic polyamides.

A further aspect is the use of the compositions according to the invention for dyeing or printing fibrous materials consisting of natural or synthetic polyamides. A further aspect is the production of printing inks and printing pastes for screen or spray printing and their use for printing fibrous materials consisting of natural or synthetic polyamides.

The non impact printing process comprises the spray printing process and ink jet printing process.

In a printing process according to the invention, multicoloured designs/patterns are produced by screen or spray printing.

The substrates can be printed on flatbed screen printing machines or rotary screen printing machines, which allow the highest production speeds (30 - 50 m/min). The spray printing machines, ChromoJet™ (J. Zimmer Maschinenbau GmbH, 9020 Klagenfurt, Austria) or Millitron^{™} (Milliken & Company, Spartanburg, SC 29304, USA), similar in principle to an ink-jet printer, run at lower speeds but are preferred, if more flexibility in terms of design possibilities and design change is desired. After colour application the prints are run through a horizontal steamer for 3 - 10 (preferably 4 to 6) min in saturated steam for colour fixation, followed by water rinsing, hydro-extraction, and drying.

Possibilities of printing, especially for mats and carpets, include the continuous or batch dyeing process and also the non impact printing or the classic printing. The non impact printing comprises the spraying of the dyes or formulations of the dyes by the ChromoJet™ process, ; Militron^{™} process or other processes (M. Peter and H.K. Rouette: "Grundlagen der Textilveredelung; Handbuch der Technologie, Verfahren und Maschinen", thirteenth, revised edition, 1989, Deutscher Fachverlag GmbH, Frankfurt/Main, Germany, ISBN 3-87150-277-4, pages 484 to 492 (chapter 7.221.1) and page 846 and Figure 8.70).

A typical printing paste for the ChromoJet™ printing or Militron^{™} printing comprises 0.1 to 50 g/kg of the dyestuff composition according to the invention, 600 g/kg stock thickener (The stock thickener composition comprising 2 - 20 g/kg of synthetic thickener with tixotropic behaviour; Dispersing/Wetting agent 1 - 5 g/kg (e.g. Sandogen® WAF liq.); 1 - 2 g/kg pH Buffer (e.g. Sandacid® PB liq.) and 0.2 - 1 g/kg of an anti foam agent, preferably a silicon anti foam agent (e.g. Antimussol® UP liq.) leading to a stock thickener of a viscosity of 6000 cps / pH 6 -7 (measured at 20°C with a Haake^{™} VT-02 Viskometer using "Spindel Nr. 3" (Rotor Nr. 3) (HAAKE^{™} is a brand name of Thermo Electron Corporation.).) and the pH is set to 5.5 - 11.5 using Caustic soda or Sandacid® PB liq. as pH controle agent. If needed addition of Sandogen® WAf liq. or Antimussol® UP liq. is added until a viscosity of 120 to 800 cps mesasured as described above is reached. After Chromojet printing the fabric or carpet, the fixation of the print is done at 90 to 120 °C (by preference at 102°C) with saturated steam during 4 - 10 min., afterwards the printed product is rinsed. (Sandogen® and Sandacid® are registered trademarks of Novartis AG, Basle, Switzerland, licensed to Clariant AG, 4132 Muttenz, Switzerland ; Antimussol® is a registered trademark of Clariant AG, 4132 Muttenz, Switzerland).

Dyeing is carried out as per known processes, see for example the dyeing processes described in Ullmanns Encyklopädie der technischen Chemie, 4th Edition, 1982, Volume 22, pages 658-673 or in the book by M. Peter and H.K. Rouette, Grundlagen der Textilveredlung, 13th Edition, 1989, pages 535-556 and 566-574. Preference is given to dyeing in the continuous process at a temperature of 30 to 100°C, more preferably 80 to 100°C, and at a liquor ratio in the range from 3:1 1 to 40:1.

By preference the substrates dyed on continuous dyeing machines. In the continuous process, dye liquor is poured evenly over the substrate, especially the carpet, running below. After colour application, the carpet runs into a steamer were it is heated with saturated steam for 2 - 15 min, during which the dyes are fixed onto the fibre. Water rinsing, hydro-extraction, and drying follow. Alternatively, the substrates are dyed with the batch method. In the generally less productive batch method, substrates are dyed in winches (becks). Here, a section of substrate runs in a loop through a full dye bath with temperatures up to boiling point for 40 - 60 min.

The substrate to be dyed can be present in the form of yam, woven fabric, loop-formingly knitted fabric or carpet for example. Fully fashioned dyeings are even permanently possible on delicate substrates, examples being lambswool, cashmere, alpaca and mohair.

The dyes according to the present invention and their salts are highly compatible with known acid dyes. Accordingly, the mixture according to the invention and their salts or mixtures can be used alone in a dyeing or printing process or else as a component in a combination shade dyeing or printing composition together with other acid dyes of the same class, i.e. with acid dyes possessing comparable dyeing properties, such as for example fastness properties and exhaustion rates from the dye bath onto the substrate. The dyes of the present invention can be used in particular together with certain other dyes having suitable chromophores. The ratio in which the dyes are present in a combination shade dyeing or printing composition is dictated by the hue to be obtained.

The novel dye compositions according to the invention, as stated above, are very useful for dyeing natural and synthetic polyamides, i.e. wool, silk and all nylon types, on each of which dyeings having a high fastness level. The dye composition according to the invention have a high rate of exhaustion and fixation. The ability of the dye composition according to the invention and their salts to build up is likewise good. On-tone dyeings on the identified substrates are of outstanding quality. All dyeings moreover have a constant hue under artificial light. Furthermore, the fastness to decating and boiling is good.

One decisive advantage of the compositions according to the invention is the stability of the stock solutions and dyeing liquors produced therewith.

The compounds according to the invention can be used as an individual dye or else, owing to their good compatibility, as a combination element with other dyes of the same class having comparable dyeing properties, for example with regard to general fastnesses, exhaustion value, etc. The combination shade dyeings obtained have similar fastnesses to dyeings with the individual dye.

The composition according to the invention can also be used as blue components in trichromatic dyeing or printing. Trichromatic dyeing or printing can utilize all customary and known dyeing and printing processes, such as for example the continuous process, exhaustion process, foam dyeing process and ink-jet process.

The composition of the individual dye components in the trichromatic dye mixture used in the process of the invention depends on the desired hue. A brown hue for example preferably utilizes 55 - 65% by weight of the invention's blue component, 20 - 30% by weight of a red component and 10 - 20% by weight of a yellow component.

In the examples which follow, parts and percentages are by weight and temperatures are reported in degrees Celsius.

### Examples

A dye bath liquor was produced comprising the below mentioned amount of the dystuffs (Ia) and (IIa) and (IIIa) per litre:

| **Example** | **grams of compound according to the formula (Ia)** | **grams of compound according to the formula (IIa)** | **grams of compound according to the formula (IIIa)** | |
|---|---|---|---|---|
| 1 | 0 | 5 | 5 | Not according to the invention (comparative example) |
| 2 | 2.66 | 1.83 | 4.9 | according to the invention |
| 3 | 3.64 | 5.56 | 0 | Not according to the invention (comparative example) |
| 4 | 2.36 | 0 | 7.33 | Not according to the invention (comparative example) |

The stability of the solutions was checked after 3, 5 and 7 days. The initially clear solutions were stored at room temperature and inspected visually after the mentioned period of time. Only the result is given when the first precipitation was noticed.

| **Example** | **Result of the stability test** |
|---|---|
| 1 | After 3 days grainy sediment was observed and after 7 days a slurry has covered the bottom of the container. |
| 2 | After 7 days no precipitation was observed. |
| 3 | After 5 days a slurry has covered the bottom of the container. |
| 4 | After 5 days a slurry comprising some grains has covered the bottom of the container. |

### USE EXAMPLE A

A dyebath at 40°C, consisting of 2000 parts of water, 1 part of a weakly cation-active levelling agent which is based on an ethoxylated aminopropyl fatty acid amide and which has affinity for dye, 0.5 parts of the dye of Preparation Example 2 and adjusted to pH 5 with 1-2 parts of 40% acetic acid is entered with 100 parts of nylon-6 fabric. After 10 minutes at 40°C, the dyebath is heated to 98°C at a rate of 1°C per minute and then left at the boil for 45-60 minutes. Thereafter it is cooled down to 70°C over 15 minutes. The dyeing is removed from the bath, rinsed with hot and then with cold water and dried. The result obtained is a blue polyamide dyeing possessing good light and wet fastnesses.

### USE EXAMPLE B

A dyebath at 40°C, consisting of 2000 parts of water, 1 part of a weakly cation-active levelling agent which is based on an ethoxylated aminopropyl fatty acid amide and which has affinity for dye, 0.5 parts of the dye of Preparation Example 2 and adjusted to pH 5.5 with 1-2 parts of 40% acetic acid is entered with 100 parts of nylon-6,6 fabric. After 10 minutes at 40°C, the dyebath is heated to 120°C at a rate of 1.5°C per minute and then left at this temperature for 15-25 minutes. Thereafter it is cooled down to 70°C over 25 minutes. The dyeing is removed from the dyebath, rinsed with hot and then with cold water and dried. The result obtained is a blue polyamide dyeing with good levelness and having good light and wet fastnesses.

### USE EXAMPLE C

A dyebath at 40°C, consisting of 4000 parts of water, 1 part of a weakly amphoteric levelling agent which is based on a sulfated, ethoxylated fatty acid amide and which has affinity for dye, 0.8 parts of the dye of Preparation Example 2 and adjusted to pH 5 with 1-2 parts of 40% acetic acid is entered with 100 parts of wool fabric. After 10 minutes at 40°C, the dyebath is heated to boiling at a rate of 1°C per minute and then left at the boil for 40-60 minutes. Thereafter it is cooled down to 70°C over 20 minutes. The dyeing is removed from the bath, rinsed with hot and then with cold water and dried. The result obtained is a blue wool dyeing possessing good light and wet fastnesses.

### USE EXAMPLE D

100 parts of a woven nylon-6 material are padded with a 50°C liquor consisting of

| | | |
|---|---|---|
| 40 | parts | of the dye of Preparation Example 2, |
| 100 | parts | of urea, |
| 20 | parts | of a nonionic solubilizer based on butyldiglycol, |
| 15-20 | parts | of acetic acid (to adjust the pH to 4), |
| 10 | parts | of a weakly cation-active levelling agent which is based on an ethoxylated aminopropyl fatty acid amide and has affinity for dye, and |
| 810-815 | parts | of water (to make up to 1000 parts of padding liquor). |

The material thus impregnated is rolled up and left to dwell in a steaming chamber under saturated steam conditions at 85-98°C for 3-6 hours for fixation. The dyeing is then rinsed with hot and cold water and dried. The result obtained is a blue nylon dyeing having good levelness in the piece and good light and wet fastnesses.

### USE EXAMPLE E

A textile cut pile sheet material composed of nylon-6 and having a synthetic base fabric is padded with a liquor containing per 1000 parts

| | |
|---|---|
| 2 | parts of dye of Preparation Example 2 |
| 4 | parts of a commercially available thickener based on carbo flour ether |
| 2 | parts of a nonionic ethylene oxide adduct of a higher alkyl phenol |
| 1 | part of 60% acetic acid. |

This is followed by printing with a paste which per 1000 parts contains the following components:

| | |
|---|---|
| 20 | parts of commercially available alkoxylated fatty alkyl amine (displace product) |
| 20 | parts of a commercially available thickener based on carob flour ether. |

The print is fixed for 6 minutes in saturated steam at 100°C, rinsed and dried. The result obtained is a level-coloured cover material having a blue and white pattern.

### USE EXAMPLE F

A dyebath at 40°C consisting of 2000 parts of water, 1 part of a weakly cation-active levelling agent which is based on an ethoxylated aminopropyl fatty acid amide and has affinity for dye, 0.5 part of the dye of Preparation Example 2, 0.4 parts of a commercially available preparation of C.I. Acid Red 336 and 0.5 part of a commercially available preparation of C.I. Acid Yellow 236 adjusted to pH 5 with 1-2 parts of 40% acetic acid is entered with 100 parts of woven wool adjusted to pH 5 with 1-2 parts of 40% acetic acid is entered with 100 parts of woven wool fabric. After 10 minutes at 40°C, the dyebath is heated to 98°C at a rate of 1°C per minute and then left at the boil for 45 to 60 minutes. This is followed by cooling down to 70°C over 15 minutes. The dyeing is removed from the bath, rinsed with hot and then with cold water and dried. The result obtained is a level brown wool dyeing having good light and wet fastnesses.

### USE EXAMPLE G

100 parts of a chrome-tanned and synthetically retanned shave-moist grain leather are dyed for 30 minutes in a bath of 300 parts of water and 2 parts of the dye of Preparation Example 2 at 55°C. After addition of 4 parts of a 60% emulsion of a sulphited fish oil, the leather is fatliquored for 45 minutes. It is then acidified with 8.5% formic acid and milled for 10 minutes (final pH in the bath 3.5-4.0). The leather is then rinsed, allowed to drip dry and finished as usual. The result obtained is a leather dyed in a level blue hue with good fastnesses.

### USE EXAMPLE H

3 parts of the dye of Preparation Example 2 are dissolved in 82 parts of demineralized water and 15 parts of diethylene glycol at 60°C. Cooling down to room temperature gives a blue printing ink which is very highly suitable for ink jet printing on paper or polyamide and wool textiles.

## Claims

1. Acid dye composition comprising a dyestuff according to the formula (I) 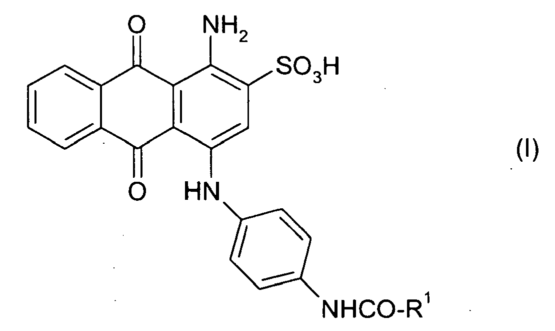 wherein R¹ signifies methyl, ethyl, propyl or butyl
and a dyestuff according to the formula (II) 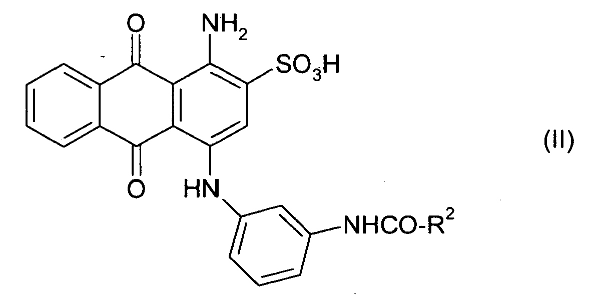 wherein R² signifies methyl, ethyl, propyl or butyl
and a dyestuff according to the formula (III) 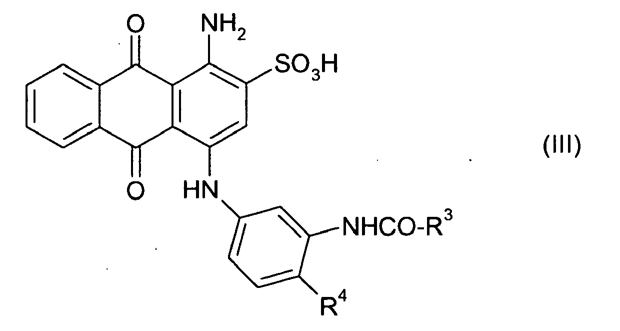 wherein
R³ signifies methyl, ethyl, propyl or butyl and
R⁴ signifies methyl, ethyl, propyl or butyl.

2. Acid dye composition comprising a dyestuff according to claim 1 **characterized in that** the substituents R¹, R², R³ or R⁴ signify independently methyl or ethyl.

3. Acid dye composition comprising a dyestuff according to claim 2 **characterized in that** mixtures according comprise a dyestuff according to the formula (Ia) 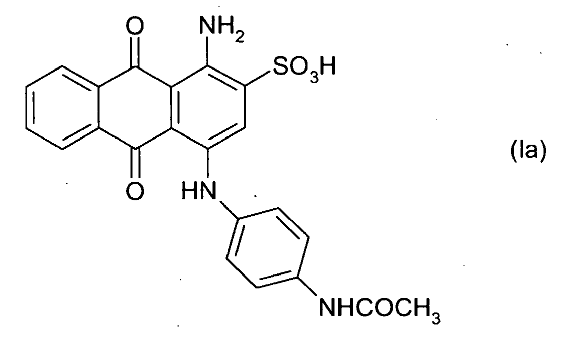 and a dyestuff according to the formula (IIa) 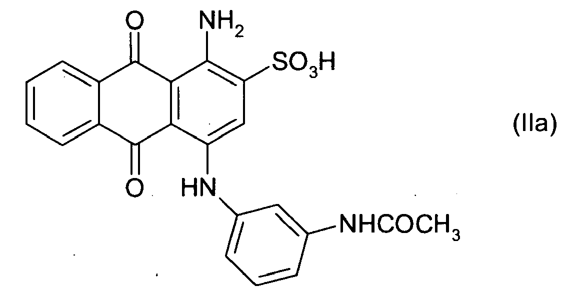 and a dyestuff according to the formula (IIIa)

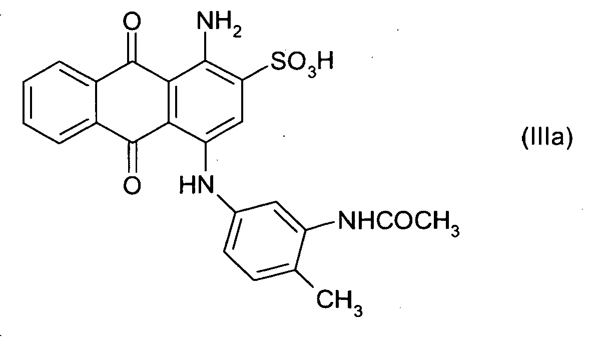

4. Use of the composition according to Claim 1 for dyeing and/or printing organic substrates consisting by preference of natural or synthetic polyamides.

5. Use of the composition according to Claim 1 for dyeing and/or printing wool, silk and synthetic polyamides.

6. Use of the composition according to Claim 1 for producing printing inks or printing pastes for the non impact printing process .

7. Fibrous organic substrate materials consisting by preference of natural or synthetic polyamides dyed or printed with a dye composition according to claim 1.

8. Process for preparing compositions according to claim 1 **characterized in that** the dyestuffs according to the formula (I) and (II) and (III) are mixed in the dye bath or are mixed as powders or as formulations before being dissolved in the dye bath.

## Patentansprüche

1. Säurefarbstoffzusammensetzung, umfassend einen Farbstoff entsprechend der Formel (I) 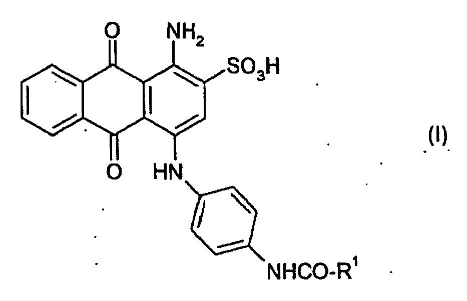 worin R¹ Methyl, Ethyl, Propyl oder Butyl bedeutet, und einen Farbstoff entsprechend der Formel (II) 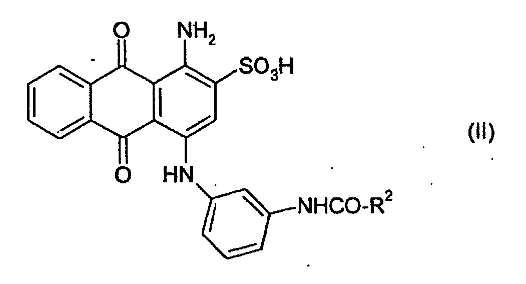 worin R² Methyl, Ethyl, Propyl oder Butyl bedeutet, und einen Farbstoff entsprechend der Formel (III) 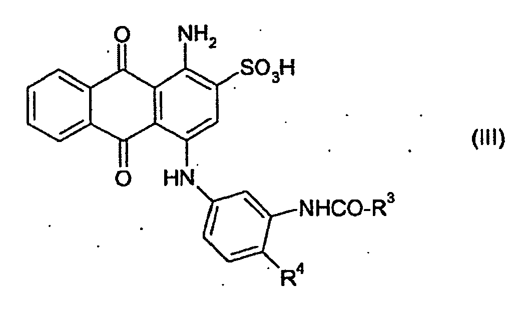 worin
R³ Methyl, Ethyl, Propyl oder Butyl und
R⁴ Methyl, Ethyl, Propyl oder Butyl bedeutet.

2. Säurefarbstoffzusammensetzung, umfassend einen Farbstoff gemäß Anspruch 1, **dadurch gekennzeichnet, daß** die Substituenten R¹, R², R³ oder R⁴ unabhängig voneinander Methyl oder Ethyl bedeuten.

3. Säurefarbstoffzusammensetzung, umfassend einen Farbstoff gemäß Anspruch 2, **dadurch gekennzeichnet, daß** Mischungen einen Farbstoff entsprechend der Formel (Ia) 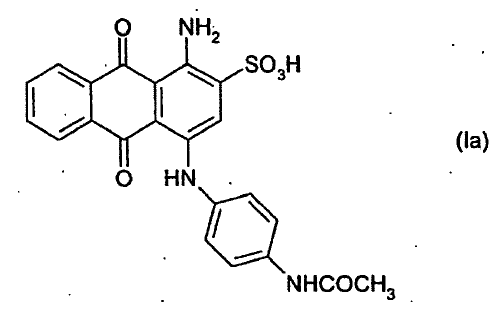 und einen Farbstoff entsprechend der Formel (IIa) 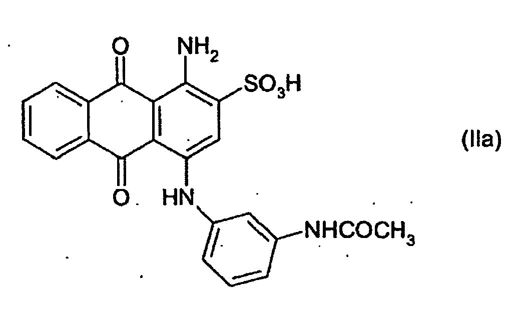 und einen Farbstoff entsprechend der Formel (IIIa) 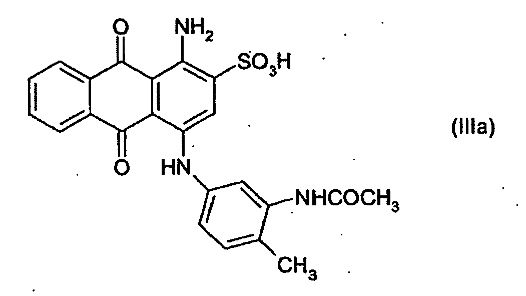 umfassen.

4. Verwendung der Zusammensetzung gemäß Anspruch 1 zum Färben und/oder Bedrucken von organischen Substraten, bestehend bevorzugt aus natürlichen oder synthetischen Polyamiden.

5. Verwendung der Zusammensetzung gemäß Anspruch 1 zum Färben und/oder Bedrucken von Wolle, Seide und synthetischen Polyamiden.

6. Verwendung der Zusammensetzung gemäß Anspruch 1 zur Herstellung von Drucktinten oder Druckpasten für das aufschlagfreie Druckverfahren.

7. Faserhaltige organische Substratmaterialien, bestehend bevorzugt aus natürlichen oder synthetischen Polyamiden, gefärbt oder bedruckt mit einer Farbstoffzusammensetzung gemäß Anspruch 1.

8. Verfahren zur Herstellung von Zusammensetzungen gemäß Anspruch 1, **dadurch gekennzeichnet, daß** man die Farbstoffe gemäß Formel (I) und (II) und (III) im Färbebad oder vor dem Auflösen im Färbebad als Pulver oder als Formulierungen mischt.

## Revendications

1. Composition de teinture acide comprenant un colorant selon la formule (I) 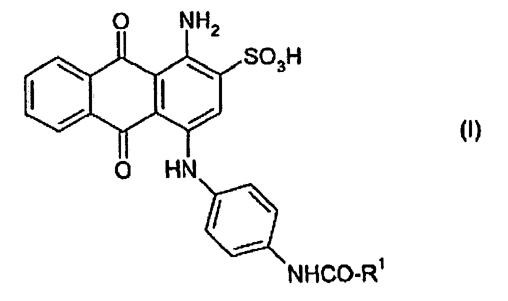 où
R¹ signifie méthyle, éthyle, propyle ou butyle et un colorant selon la formule (II) 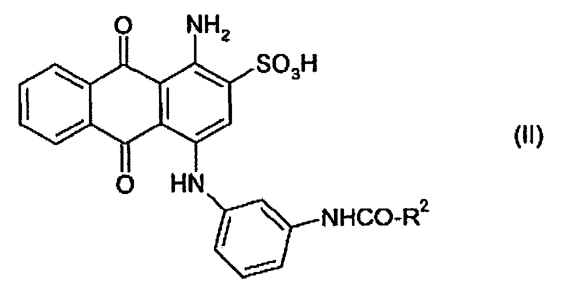 où
R² signifie méthyle, éthyle, propyle ou butyle et un colorant selon la formule (III) 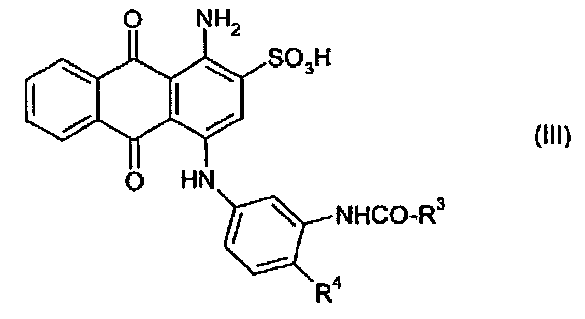 où
R³ signifie méthyle, éthyle, propyle ou butyle et
R⁴ signifie méthyle, éthyle, propyle ou butyle.

2. Composition de teinture acide comprenant un colorant selon la revendication 1, **caractérisée en ce que** les substituants R¹, R², R³ ou R⁴ signifient, indépendamment, méthyle ou éthyle.

3. Composition de teinture acide comprenant un colorant selon la revendication 2, **caractérisée en ce que** des mélanges conformes comprennent un colorant selon la formule (Ia) 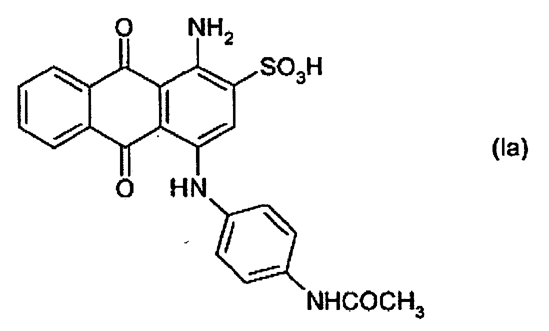 et une teinture selon la formule (IIa) 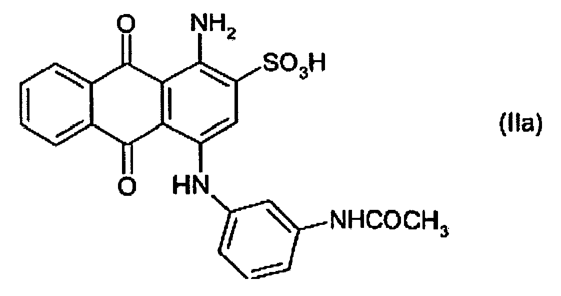 et une teinture selon la formule (IIIa)

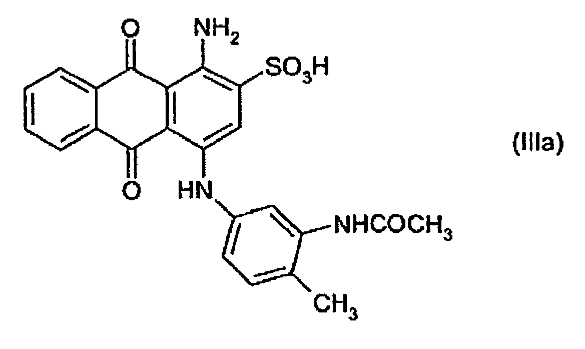

4. Utilisation de la composition selon la revendication 1 pour la teinture et/ou l'impression de substrats organiques constitués de préférence par des polyamides naturels ou synthétiques.

5. Utilisation de la composition selon la revendication 1 pour la teinture et/ou l'impression de laine, de soie et de polyamides synthétiques.

6. Utilisation de la composition selon la revendication 1 pour produire des encres d'imprimerie ou des pâtes d'imprimerie pour le procédé d'impression sans impact.

7. Matériaux de substrat organique fibreux, de préférence constitués par des polyamides naturels ou synthétiques teints ou imprimés avec la composition de teinture selon la revendication 1.

8. Procédé pour préparer des compositions selon la revendication 1, **caractérisé en ce que** les colorants selon les formules (I) et (II) et (III) sont mélangés dans le bain de teinture ou sont mélangés sous forme de poudres ou de formulations avant d'être dissous dans le bain de teinture.
